# EUROPEAN PATENT SPECIFICATION

(11) **EP 1 381 128 B1**
(45) Date of publication and mention of the grant of the patent: **24.08.2016**
(21) Application number: 03076387.4
(22) Date of filing: 09.05.2003
(51) Int. Cl.: H02B 1/40

(54) **Method of constructing a wall of an electric switchboard and electric switchboard with a wall constructed in accordance with that method**
Verfahren zur Herstellung eines Wandelements und Wandelement für einen Schaltschrank
Procédé d'assemblage d'un panneau et panneau pour une armoire eléctrique

(30) Priority: 27.05.2002 IT RM20020294
(43) Date of publication of application: 14.01.2004
(73) Proprietor: BTICINO S.P.A., Viale Borri, 231 21100 Varese (IT)
(72) Inventor: Fabrizi, Fabrizio, 24100 Bergamo (IT)
(74) Representative: Carangelo, Pierluigi

(56) References cited:
- DE-A- 1 440 212
- US-A- 5 341 273

## Description

The present method concerns switchboards for the distribution of electricity, or electric switchboards, and, more particularly, a method of constructing a wall of an electric switchboard and an electric switchboard comprising a wall constructed in accordance with the method.

Electric switchboards are box structures, made of metal and/or insulating material, capable of accommodating bus bars, switches, fuses and other electrical apparatus. In the case of electric switchboards in which the bus bars have to be attached to a metal wall of the switchboard, use is normally made of appropriately insulated metallic fixing means. The fixing means and the insulators associated with them are generally made up of various separate parts, so that the mounting of the bars on the wall becomes relatively laborious. Furthermore, the need for insulating the bars both from the metallic wall and from the metallic fixing means implies considerable occupation of space and this has negative repercussions on the depth of the electric switchboard.

DE 1440212 discloses an electrical cabinet comprising wall sections made of superposed plastic sheets and supporting bars for rein forcement.

With a view to keeping transport costs as low as possible, electric switchboards are often delivered in a disassembled condition. There is thus a strongly felt need, especially in connection with the production of small electric switchboards intended for mounting on a wall, for designing the walls of the switchboard in such a way as to facilitate the assembly operations to the greatest possible extent.

The principal aim of the present invention is to construct a wall of an electric switchboard, particularly the wall intended to sustain the bus bars, that lends itself to a rapid assembly of the bus bars and occupies a minimum of space.

According to the invention, this aim is attained by means of a method that envisages the preparation of a metal plate having at least one opening and of two panels, at least one of which is made of insulating material and intended to constitute an internal surface of the electric switchboard. The method further envisages the placing of the metal plate between the two panels and the fixing of the two panels to each other through the opening of the metal plate.

The invention will be understood more clearly from the detailed description about to be given of an embodiment thereof, the description making reference to the attached drawings, of which:
- Figure 1 shows a perspective view of the detached component parts of a wall of an electric switchboard in accordance with the invention,
- Figure 2 shows a perspective view of the same wall as seen after assembly,
- Figure 3 shows an enlarged perspective view of a part of the wall of Figure 2, and
- Figure 4 shows a partial perspective view that indicates how some bus bars are fixed to a wall of the electric switchboard in accordance with the invention.

The wall shown in the figures is the bottom wall of an electric switchboard intended to be mounted on a wall. It consists of an external panel 10 made - for example - of rigid plastic material, an internal panel 11 and a metallic structure 12 consisting of a metal plate 13 with a large opening 14 and two metal sections 15 welded along two opposite sides (vertical as shown in the figure) of the plate 13. A frame 16 made of rigid plastic material is fixed to the edges of the plate.

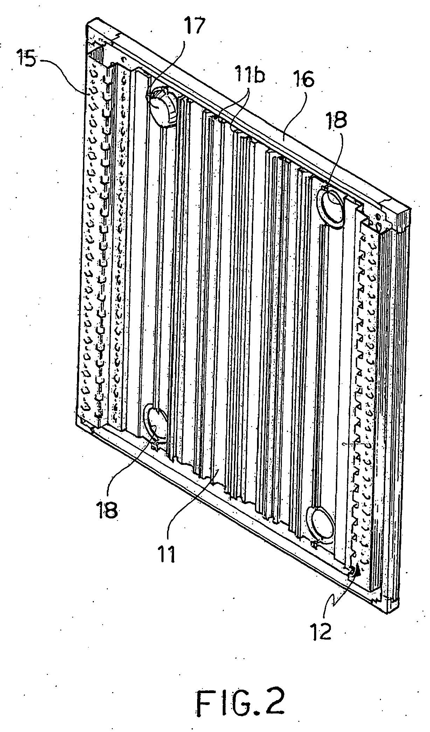

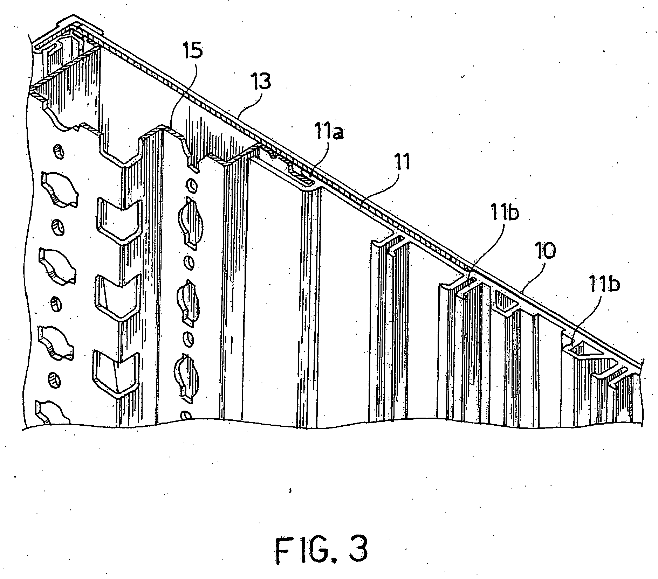

According to the method of the invention, the metal plate 13 is placed between the two panels 10 and 11, which thus come almost into contact with each other through the opening 14. In this example, as can readily be seen in Figure 3, which shows the upper left-hand part of the wall of Figure 2 without the frame, the vertical edges 11a of the internal panel 11 engage with a corresponding seating formed along the internal edges of the metal sections 15.

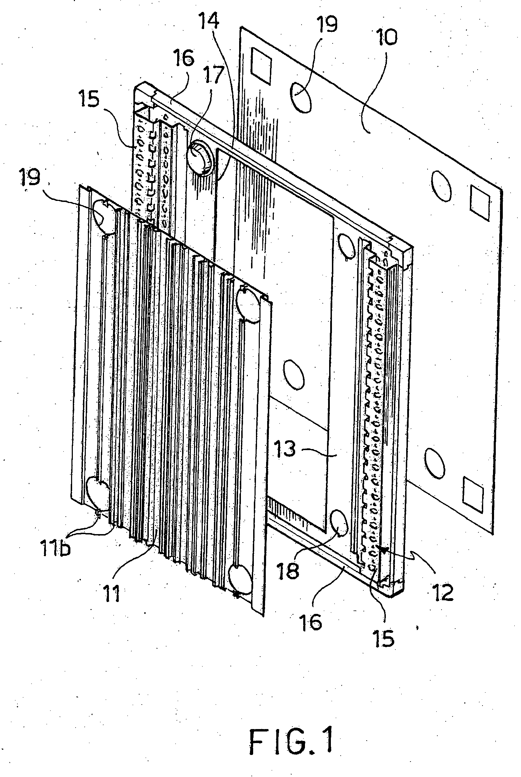

With a view to facilitating the alignment of the two panels 10 and 11 with the plate 13, the latter is provided with two reference elements on its opposite faces and the panels 10 and 11 are provided with reference elements that match them. The reference elements on the plate consist of two small bowls 17 made of plastic material (only one of which can be seen in Figures 1 and 2) and provided with appropriate engagement means (not shown) that pass through a circular opening of the plate. In the illustrated embodiment the plate is provided with four circular openings 18, each of which may serve for this purpose. The reference elements of the panels 10 and 11 consist of openings 19 into which the two small bowls 17 projecting from the plate 13 can be inserted. Then the facing surfaces of the two panels 10 and 11 are attached to each other, for example, by means of ultrasonic spot welding or glueing with an appropriate adhesive.

Lastly, the frame 16 is attached to the edges of the metal plate 13. To this end the plate 13 may be bent to form an angle at the edges, as can be seen in Figure 3. The frame 16 is shaped in such a way as to be provided with a longitudinal groove that constitutes a seating for the edges of the side walls (not shown) of the switchboard.

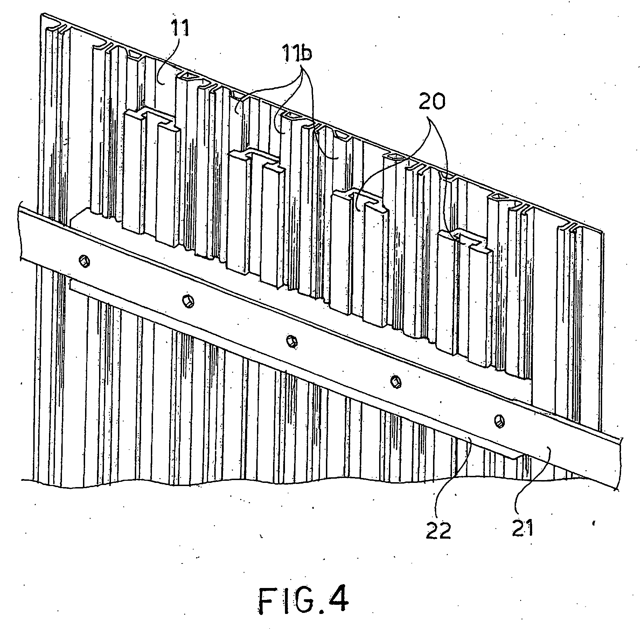

The internal panel 11 is provided with a series of ribs 11b that extend in the vertical direction and form seatings into which there can be inserted copper bars 20 having a U-shaped section, as is shown in Figure 4. The bars are kept in position by means of metallic cross pieces 21 (only one of which is shown in Figure 4) fixed to the panel 11 (with means that are not shown) after the interposition of appropriately shaped cross pieces 22 made of insulating material.

As will be realized from what has been explained above, the method in accordance with the invention makes it possible for rigid and compact walls for electric switchboards to be constructed in an extremely simple manner, the resulting walls lending themselves very readily to the construction of electric switchboards made up for the most part of insulating materials, but which are nevertheless rigid and robust. The electric switchboards are also of limited depth and easy to assemble.

Although only a single embodiment of the invention has here been illustrated and described, numerous variants and modifications are clearly possible without thereby overstepping the underlying inventive concept.

## Claims

1. A method of constructing a wall of an electric switchboard **characterized by** the following operations:
- preparing a metal plate (13) with at least one opening (14),
- preparing two panels (10, 11), at least one of which is made of insulating material and intended to constitute an internal surface of the electric switchboard,
- interposing the metal plate (13) between the two panels (10, 11), and
- fixing the two panels (10, 11) to each other through the opening (14) of the metal plate (13).

2. A method in accordance with Claim 1, wherein the operation of preparing two panels comprises the formation on the internal panel (11) of ribs (11b) capable of forming seatings for bus bars (20).

3. A method in accordance with Claim 1 or Claim 2, wherein the operation of fixing the two panels (10, 11) to each other comprises ultrasonic welding.

4. A method in accordance with Claim 1 or Claim 2, wherein the operation of fixing the two panels (10, 11) to each other comprises an application of adhesive.

5. A method in accordance with any one of the preceding claims, wherein the operation of preparing a metal plate (13) comprises the formation of at least one reference element (17) on the plate and the operation of preparing two panels (10, 11) comprises the formation on at least one of the two panels of at least one reference element (19) that matches the reference element on the plate.

6. An electric switchboard comprising one wall for the mounting of bus bars, **characterized in that** the wall comprises an internal panel (11), an external panel (10) and a metal plate (13) interposed between the internal panel and the external panel, where the internal panel is made of insulating material and the metal plate is provided with at least one opening (14) through which the internal panel (11) is fixed to the external panel (10).

7. An electric switchboard in accordance with Claim 6, wherein the internal panel (11) is provided with ribs (11b) capable of forming seatings for bus bars (20).

8. An electric switchboard in accordance with Claim 6 or Claim 7, wherein the metal plate is provided with at least one reference element (17) and at least one of the two panels (10, 11) is provided with a reference element (19) that matches the reference element (17) on the metal plate.

9. An electric switchboard in accordance with Claim 8, wherein the metal plate (13) is provided with two reference elements formed by two elements (17) projecting from the plate and the two panels (10, 11) are provided with respective openings (19) into which the two projecting elements (17) are inserted.

## Patentansprüche

1. Ein Verfahren zum Aufbauen einer Wand einer elektrischen Schalttafel, **gekennzeichnet durch** die folgenden Schritte:
Vorbereiten einer Metallplatte (13) mit zumindest einer Öffnung (14),
Vorbereiten von zwei Tafeln (10, 11), von denen zumindest eine aus isolierendem Material hergestellt ist und dazu gedacht ist, eine Innenoberfläche der elektrischen Schalttafel zu bilden,
Anordnen der Metallplatte (13) zwischen den zwei Tafeln (10, 11), und
Fixieren der zwei Tafeln (10, 11) aneinander **durch** die Öffnung (14) der Metallplatte (13).

2. Ein Verfahren gemäß Anspruch 1, bei dem der Schritt des Vorbereitens von zwei Tafeln die Bildung von Rippen (11 b) auf der inneren Tafel (11) aufweist, die in der Lage sind, Sitze für Sammelschienen (20) zu bilden.

3. Ein Verfahren gemäß Anspruch 1 oder Anspruch 2, bei dem der Schritt des Fixierens der zwei Tafeln (10, 11) aneinander Ultraschallschweißen aufweist.

4. Ein Verfahren gemäß Anspruch 1 oder Anspruch 2, bei dem der Schritt des Fixierens der zwei Tafeln (10, 11) aneinander eine Aufbringung eines Haftmittels aufweist.

5. Ein Verfahren gemäß einem der vorhergehenden Ansprüche, bei dem der Schritt des Vorbereitens einer Metallplatte (13) die Bildung von zumindest einem Bezugselement (17) auf der Platte aufweist und der Schritt des Vorbereitens von zwei Tafeln (10, 11) die Bildung von zumindest einem Bezugselement (19), das mit dem Bezugselement auf der Platte zusammenpasst, auf zumindest einer der zwei Tafeln aufweist.

6. Eine elektrische Schalttafel, die eine Wand für die Befestigung von Sammelschienen aufweist, **dadurch gekennzeichnet, dass** die Wand eine innere Tafel (11), eine äußere Tafel (10) und eine Metallplatte (13) aufweist, die zwischen der inneren Tafel und der äußeren Tafel angeordnet ist, wobei die innere Tafel aus isolierendem Material hergestellt ist und die Metallplatte mit zumindest einer Öffnung (14) versehen ist, durch die die innere Tafel (11) an der äußeren Tafel (10) fixiert ist.

7. Eine elektrische Schalttafel gemäß Anspruch 6, bei der die innere Tafel (11) mit Rippen (11 b) versehen ist, die in der Lage sind, Sitze für Sammelschienen (20) zu bilden.

8. Eine elektrische Schalttafel gemäß Anspruch 6 oder Anspruch 7, bei der die Metallplatte mit zumindest einem Bezugselement (17) versehen ist und zumindest eine der zwei Tafeln (10, 11) mit einem Bezugselement (19) versehen ist, das mit dem Bezugselement (17) auf der Metallplatte zusammenpasst.

9. Eine elektrische Schalttafel gemäß Anspruch 8, bei der die Metallplatte (13) mit zwei Bezugselementen versehen ist, die durch zwei Elemente (17) gebildet sind, die von der Platte vorstehen, und die zwei Tafeln (10, 11) mit jeweiligen Öffnungen (19) versehen sind, in die die zwei vorstehenden Elemente (17) eingefügt werden.

## Revendications

1. Procédé de construction d'une paroi d'un tableau électrique, **caractérisé en ce qu'**il comprend les opérations suivantes :
- préparation d'une plaque métallique (13) comportant au moins une ouverture (14),
- préparation de deux panneaux (10, 11), dont l'un au moins est fait de matériau isolant et destiné à constituer une surface interne du tableau électrique,
- interposition de la plaque métallique (13) entre les deux panneaux (10, 11) et
- fixation des deux panneaux (10, 11) l'un à l'autre à travers l'ouverture (14) de la plaque métallique (13).

2. Procédé selon la revendication 1, dans lequel l'opération de préparation de deux panneaux comprend la formation sur le panneau intérieur (11) de nervures (11b) qui peuvent former des logements pour des barres omnibus (20).

3. Procédé selon la revendication 1 ou 2, dans lequel l'opération de fixation des deux panneaux (10, 11) l'un à l'autre comprend un soudage par ultrasons.

4. Procédé selon la revendication 1 ou 2, dans lequel l'opération de fixation des deux panneaux (10, 11) l'un à l'autre comprend l'application d'adhésif.

5. Procédé selon l'une quelconque des revendications précédentes, dans lequel l'opération de préparation d'une plaque métallique (13) comprend la formation d'au moins un élément de repérage (17) sur la plaque et l'opération de préparation deux panneaux (10, 11) comprend la formation sur au moins un des deux panneaux d'au moins un élément de repérage (19) correspondant à l'élément de repérage sur la plaque.

6. Tableau électrique comprenant une paroi pour le montage de barres omnibus, **caractérisé en ce qu'**il comprend un panneau interne (11), un panneau externe (10) et une plaque métallique (13) interposée entre le panneau interne et le panneau externe, le panneau interne étant fait de matériau isolant et la plaque métallique étant munie d'au moins une ouverture (14) à travers laquelle le tableau interne (11) est fixé au tableau externe (10).

7. Tableau électrique selon la revendication 6, dans lequel le panneau interne (11) est muni de nervures (11b) qui peuvent former des assises pour des barres omnibus (20).

8. Tableau électrique selon la revendication 6 ou 7, dans lequel la plaque métallique est munie d'au moins un élément de repérage (17) et au moins un des deux panneaux (10, 11) est muni d'un élément de repérage (19) qui correspond à l'élément de repérage (17) de la plaque métallique.

9. Tableau électrique selon la revendication 8, dans lequel la plaque métallique (13) est munie de deux éléments de repérage formés par deux éléments (17) qui dépassent de la plaque et les deux panneaux (10, 11) sont munis d'ouvertures (19) correspondantes dans lesquelles les deux éléments en saillie (17) sont introduits.
